# EUROPEAN PATENT SPECIFICATION

(11) **EP 1 829 289 B1**
(45) Date of publication and mention of the grant of the patent: **02.09.2015**
(21) Application number: 05849357.8
(22) Date of filing: 22.11.2005
(51) Int. Cl.: H04L 12/26, H04L 12/28, H04J 13/16, H04M 1/725

(54) **METHOD AND SYSTEM FOR MULTI-FUNCTION PUSH-TO-ACTIVATE**
VERFAHREN UND SYSTEM FÜR MULTIFUNKTIONALES PUSH-TO-ACTIVATE
PROCEDE ET SYSTEME MULIT-FONCTION PAR BOUTON POUSSOIR

(30) Priority: 17.12.2004 US 15120
(43) Date of publication of application: 05.09.2007
(73) Proprietor: Motorola Mobility LLC, Libertyville, IL 60048 (US)
(72) Inventor: AHYA, Deepak, P., Plantation, FL 33324 (US); BAUDINO, Daniel, A., Lake Worth, FL 33467 (US)
(74) Representative: Openshaw, Paul Malcolm
(86) International application number: PCT/US2005/042295
(87) International publication number: WO 2006/065472

(56) References cited:
- US-A- 5 870 149
- US-A- 6 128 371
- US-A1- 2002 102 999
- US-A1- 2004 224 710
- US-B1- 6 600 903
- US-B1- 6 763 226

## Description

### FIELD OF THE INVENTION

This invention relates generally to multi-function communication devices, and more particularly to a method and system for a context sensitive multi-function push-to-activate function.

### BACKGROUND OF THE INVENTION

Push-to-talk technology in cellular phones has spurred on additional functions including push-to-listen, push-to-view, push-to-send, and push-to-Internet among other functions. All these push-to-activate functions using a single activation button can be referred generically herein as "PTx". Since there are so many ways now to use the same activation button, a user is more likely to fail to realize what he or she is currently activating without greater familiarity with a particular communication device having such PTx technology. Further functions being added to communication devices will only exacerbate the problem outlined above.

There are existing techniques to enhance or adapt existing user interfaces for use with multiple functions. For example, some gaming devices allow mapping of keys to an object on the screen within a particular game. There are also display-based keyboards on personal digital assistants and soft keys on mobile devices which provide appropriate options for the current state of an application running on such devices Nonetheless, each of these devices fails to offer a user friendly push-to-activate button when multiple functions can be activated with the same button. Furthermore, no existing product having multiple functions and PTx technology provides the appropriate immediacy to a particular function when such push-to-activate button is activated.

US 2004/224710 A1 discloses a system, apparatus, and method for introducing services into a Push to Talk (PTT) environment. Requests for services are generated and transmitted via requesting PTT clients. The request is received at a PTT server, which forwards the request to a PTT application server recognized by the PTT server as another PTT client. The requested service is performed at the PTT application server, and a result is generated in response. The result is transmitted from the PTT application server to the requesting PTT client by way of the PTT server. The request for service may be generated upon user selection, from among the user's selectable options, of an appropriate service request via a User Interface (UI) of a mobile device associated with the PTT client, or via physical buttons, switches, joysticks, levers, trackballs or wheel rollers, voice-activated input, text entry, touch screens or any other user input system or mechanism that allows the user to select the desired PTT services.

### SUMMARY OF THE INVENTION

Embodiments in accordance with the present invention can provide a user friendly method and system of indicating when a particular function among a plurality of functions is ready to be activated or of indicating which among the plurality of functions will be activated upon activation.

In a first embodiment of the present invention, a multifunction push-to-activate system can include a push to activate button on a communication transceiver for activating one among a plurality of communication functions and an indicator for providing an indication of at least one among when a particular function is ready to be activated and which among the plurality of communication functions will be activated upon user activation of the push to activate button. The system can further include an immediacy manager which monitors the state of the particular function and assigns a highest priority available to the particular function when the particular function is activated by the push to activate button. The system can further include a data manager coupled to the immediacy manager that receives requests from the immediacy manager for the highest priority available and formats information packets for the highest priority available for the particular function activated. The data manager can apply at least one among classifier tags and priority settings to information packets for the particular function. The system can also include a push-to-activate manager that sets up a lowest set up time connection to a network entity for transmission of the information packets.

In a second embodiment of the present invention, a multifunction push-to-activate system can include a push to activate button on a communication transceiver for activating one among a plurality of communication functions and an integrated indicator on the push to activate button for providing an indication of at least one among when a particular function is ready to be activated and which among the plurality of communication functions will be activated upon user activation of the push to activate button. The plurality of communication functions can include at least one among a push-to-talk function, a push-to-listen function, a push-to-view function, a push-to-send function, or a push-to-link to a network site. The integrated indicator can include a display capable of displaying text or other information or alternatively can include a color indicator operating cooperatively with a main display coupled to the communication transceiver. In any event, the system can grant the communication function activated by the user activation of the push to activate button greater priority over other communication functions. The system can further include an immediacy manager and a data manager coupled to the push-to-activate button wherein the immediacy manager monitors a state of at least two applications running on the system and the activation of the push-to-activate button causes the data manager to add at least one among headers, flags, and settings having a highest priority. The immediacy manager can communicate with a push to activate manager to establish a connection using appropriate information from at least one among a plurality of applications running on the system so that information from the plurality of applications subsequently goes through the immediacy manager. Further note, the push to activate manager can establish a lowest possible set up time connection to different network entities using information from at least one among the plurality of applications running on the system upon receiving a request from the immediacy manager.

In a third embodiment of the present invention, a context sensitive method of operating a multi-function communication device can include the steps of enabling a multifunction push-to-activate function for activating one among a plurality of communication functions and indicating via an activation device for the multifunction push-to-activate function of at least one among when a particular function is ready to be activated and which among the plurality of communication functions will be activated upon user activation of the activation device. The step of indicating can include displaying text or other information in an integrated fashion through the activation device or alternatively providing a color indicator operating cooperatively with a main display coupled to the multi-function communication device. The method can further include the step of granting a greater priority to a communication function activated by the activation device over other functions operating at the multi-function communication device. The method can further include the steps of monitoring a state of at least two applications running on the communication device using an immediacy manager coupled to the activation device and adding at least one among headers, flags, and settings having a highest priority using a data manager to data packets associated with at least one function activated using the activation device. The method can further include the step of communicating information from at least one among a plurality of applications running on the communication device through the immediacy manager when the immediacy manager communicates with a push to activate manager to establish a connection using appropriate information from at least one among the plurality of applications running on the communication device. The method can further include the step of establishing (by push to activate manager) a lowest possible set up time connection using information from at least one among the plurality of applications running on the communication device upon receiving a request from the immediacy manager.

Other embodiments, when configured in accordance with the inventive arrangements disclosed herein, can include a system for performing and a machine readable storage for causing a machine to perform the various processes and methods disclosed herein.

### BRIEF DESCRIPTION OF THE DRAWINGS

FIG. 1 is an illustration of an communication device demonstrating the use of a different color light indicator in conjunction with a corresponding different push-to-activate function in accordance with an embodiment of the present invention.
FIG. 2 is a side view of a communication device having different text that displays through an integrated push-to-activate button in accordance with an embodiment of the present invention.
FIG. 3 is a front view of a communication device illustrating a side view of a push-to-activate button having and embedded display therein in accordance with an embodiment of the present invention.
FIG. 4 is block diagram of a push-to-activate system in accordance with an embodiment of the present invention.
FIG. 5 is a state diagram of a push-to-activate system in accordance with an embodiment of the present invention.

### DETAILED DESCRIPTION OF THE DRAWINGS

While the specification concludes with claims defining the features of embodiments of the invention that are regarded as novel, it is believed that the invention will be better understood from a consideration of the following description in conjunction with the figures, in which like reference numerals are carried forward.

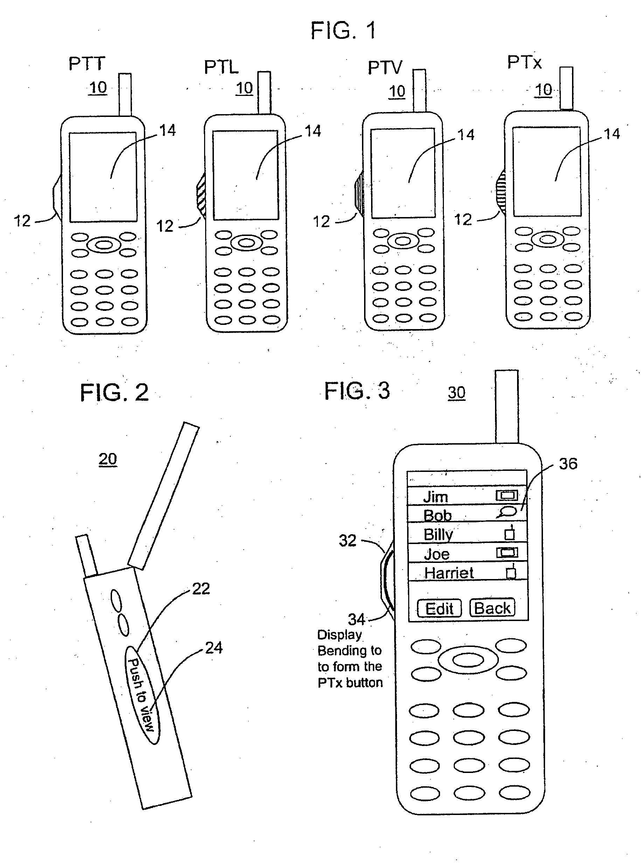

Generally, embodiments in accordance with the invention herein can provide visual (and optionally auditory) indications to a user about the functionality offered by a PTx button at any given time and provide a greater priority to the functionality or function activated by the PTx button. Referring to FIG. 1, a communication device 10 such as a cellular phone can include a display 14 and a PTx button or activation device 12. In this example, the PTx button 12 can include and embed visual indicators serving as cues for a user as to when a function is ready for activation and/or as to which function will be activated in a multi-function device such as the communication device 10. The visual indicators can come in many different forms and not necessarily in the form shown in the examples provided herein. In FIG. 1, the visual indicators can be different color LEDs that indicate a push-to-talk (PTT) function for a first color, a push-to-listen (PTL) function for a second color, a push-to-video (PTV) function for a third color, and a push-to-X function for a last color where the "push-to-X" can represent any function that can be activated using a PTx button. Alternatively, as shown in the communication device 20 of FIG. 2, an immediacy or PTx button 22 can be a lighted display based key with text options which are highlighted in accordance with the context of the application being activated to serve as an indicator 24. In other words, when the immediacy button (22) is applicable from a User Interface point of view, the button shows the functionality (via text, color and possibly audio as well) indicating the immediacy button or PTx button 22 is available at that time for that function.

In another example as illustrated in FIG. 3, if a user of a communication device to is using a phone book function and the contact highlighted on a display 36 has a Private ID or PTT identifier, then the function of a PTx button 32 can and should be PTT. If the highlighted contact has a PTL number configured on the contact list, then the functionality is PTL. If the application running is a camera, or a picture viewer, then the functionality can be push-to-send (PTS). Again, an embedded display 34 can be used to provide visual reinforcement (using text, color, or otherwise) of the function being activated.

The embodiments above modify the PTx button to reflect the context of the impending function activation. In one embodiment (as shown in FIG. 1), the PTX button 12 can be transparent and a LED inside can illuminate the button 12 according to the application and the context of the button. In another embodiment (as shown in FIGs. 2 and 3), a curvature display 34 can be embedded in the button 22 or 32. There are many curvature displays available and this key can even provide and accommodate a single line display. Using an embedded display, the PTx button can display the full word or name of a functionality of the button being used at the time. Every time that the application changes the functionality of the PTx button 32, the display 34 embedded on the button 32 can show different text indicating the current functionality. The text on the display can be customized for new functionality or new applications downloaded on the phone. Optionally, the same concept of a context sensitive function indicator can also be linked to an external environment (outside the device 30) using Bluetooth or any other protocol-based sensors. In yet another alternative, LEDs and a display can be used cooperatively to enable the display to use text to indicate the current functionality and LED lights for added user recognition. Note, although some of the examples illustrate embedded indicators within the PTx button, embodiments herein are not necessarily limited to embedded indicators within the PTx button.

The embodiments herein are enablers for a more user friendly device that has multiple modes of functionality. A mobile user by definition is usually not in the best environment (a mobile environment) to understand all the options available to them during the phone operation or other operations. The mobile user usually does not have the time to spend to understand such intricacies while in the mobile environment. Adding multiple functions to a single button can likely cause confusion that generally can be broken down into to forms or types of confusion, namely confusion as the when to press the PTx button and confusion as to what the PTx button function will do. Even though a user can possibly figure out the functions without such aides, the PTx function button will only get more complicated and challenging for users as the number of functions increase in mobile devices. The added cognitive loading experience by a user compared to just having a single function push-to-talk button will only drive users further to seek enablers as described herein.

A multifunction PTx key in accordance with the invention can be embodied using hardware and software components to display (light up) the PTx key with appropriate description/option text when an application has reached a state where an immediacy button or a PTx makes sense as described above. Such a function can also add a priority classifier, headers and flags/settings for those packets to be treated differently (with higher priority) in the wireless network, backend wire line network and from an application server point of view.

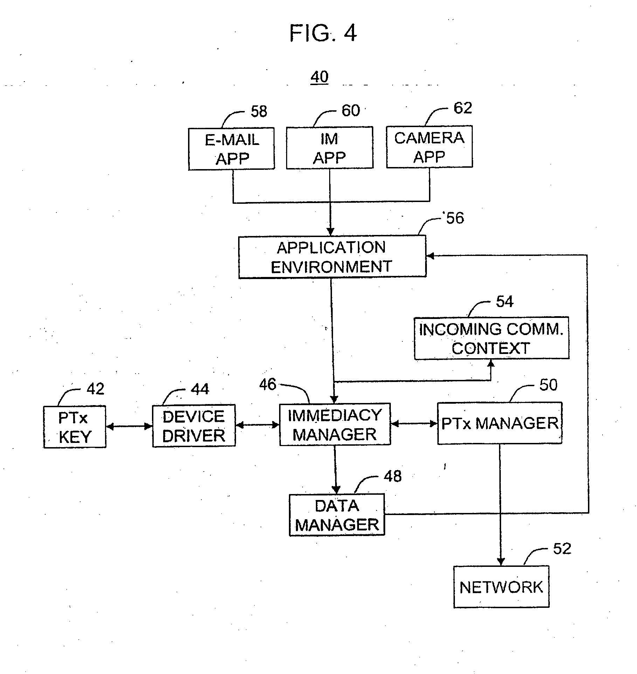

Referring to FIG. 4, the device hardware and software component of a system 40 can include a PTx key 42 with capability to display different option text or the ability to indicate different option information. The system 40 can further include an immediacy manager 46 coupled to the PTx key 42 via a device driver 44. The immediacy manager 46 can monitor the state of the application and enables the PTx key 42 when appropriate. Upon a user pressing the PTx key 42, the immediacy manager 46 requests a data manager 48 to add headers / add flags / fill out settings for the highest priority available. The immediacy manager 46 also communicates to a PTx manager 50 to establish connections (to a network 52 for example) using appropriate information from the respective applications 58, 60 or 62 via an application environment 56. Application 58 can be an email application, application 60 can be an instant messaging application, and application 62 can be a camera application as examples. Subsequently, every packet from the application (58, 60 or 62) can go through the Immediacy manager 46 via the application environment 56.

The data manager 48 (depending on the application and upon a request from the immediacy manager 46) can fill out necessary settings / flags / settings prior to ending packets to media access control (MAC) and/or physical layers (not shown). The PTx manager 50 can establish the lowest possible set up time connection to different network entities using the information from the application upon receiving a request from Immediacy manager 46. Note also that the immediacy manager 46 can handle incoming communication 54 in accordance with the context of such incoming communication.

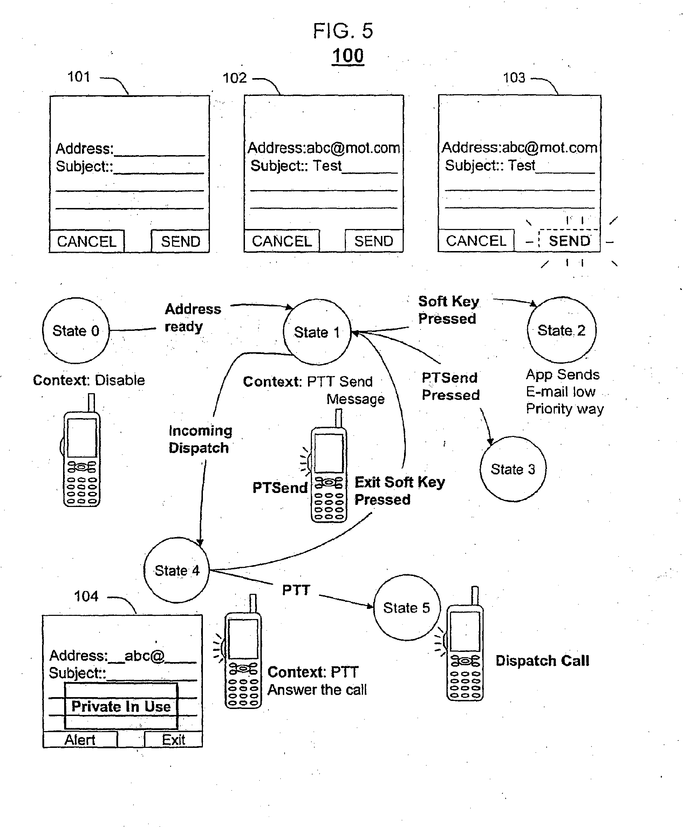

In the context of an all IP-based network, the Immediacy manager can be responsible for sending data/packets to network entity at the highest priority, which is either a final destination or gateway. The Data manager can apply classifier flags (which indicate wireless network priority), add information with respect to wire line network which will follow wireless network for prioritization of the packets (some of the 4G wireless network will perform this mapping automatically) and apply priority settings automatically within the application framework (see example below with reference to FIG. 5). Furthermore a PTx manager can, upon a selection of a PTx button, set up a lowest set up time connection to a network entity.

Referring to FIG. 5, an example use case 100 using an email application is shown. Once the e-mail application is launched, the Inbox is shown and the user makes a selection to compose an outgoing e-mail message using window 101. From the time the e-mail application is launched, the immediacy manager starts monitoring the application. The PTx key can be kept in a disabled state (State0). The e-mail composer shows the user the options to enter the address, subject and text. Now the Immediacy manager waits for Address and Subject fields to be populated as shown in window 102. Once they are filled then PTx key is enabled and a PTSend option being available is communicated to end user (State 1) as shown in window 103. Now, the application can receive the "send" command from the regular send option (Soft Key - State 2) or from the PTSend key. If the PTSend key is activated, then the application sends the e-mail using the Highest priority option (State 3). This high priority setting can be done automatically. This is equivalent of Outlook Email Composer allowing user to select " Importance High". The immediacy manager will also add network (wireless and wire line) priority as described earlier. Upon pressing of PTSend, the urgent message with higher priority over wireless and wire line network is sent. The message can be delivered in the fastest way to an Exchange / E-mail server and subsequently via an application setting (i.e. Importance High), whereupon the server delivers the message to recipient in a quickest way.

In a concurrency example, if in state 1 and a dispatch call is received, the immediacy Manager can change the context of the PTx Key to accept the call (State 4 - the e-mail can be suspended or put into the background) and the display may appear like window 104. This option can be user or carrier configurable. The user can choose to exit (ignore dispatch notification) and continue with the email application or choose to take the dispatch call. With notification, the immediacy manager changes the information communicated via PTx key to be PTT or Push-to-Talk (State 5).

In summary, embodiments of the invention provide new enablers for push-to-activate functions for multiple applications in user friendly fashion. Accordingly, the ability to monitor application context to communicate appropriate PTx options at the time when a particular option is available provide for better ease of use. Furthermore, embodiments herein also enable the ability to add application, wireless and wire line network priority upon activation of the PTx key.

In light of the foregoing description, it should be recognized that embodiments in accordance with the present invention can be realized in hardware, software, or a combination of hardware and software. A network or system according to the present invention can be realized in a centralized fashion in one computer system or processor, or in a distributed fashion where different elements are spread across several interconnected computer systems or processors (such as a microprocessor and a DSP). Any kind of computer system, or other apparatus adapted for carrying out the functions described herein, is suited. A typical combination of hardware and software could be a general purpose computer system with a computer program that, when being loaded and executed, controls the computer system such that it carries out the functions described herein.

In light of the foregoing description, it should also be recognized that embodiments in accordance with the present invention can be realized in numerous configurations contemplated to be within the scope of the claims. Additionally, the description above is intended by way of example only and is not intended to limit the present invention in any way, except as set forth in the following claims.

## Claims

1. A multifunction push-to-activate system, comprising:
a push-to-activate physical button (12; 22; 32) on a communication transceiver (10; 20; 30) for selectively activating a plurality of push-to-activate communication functions; **characterised by**:
a dynamically configurable indicator (24; 34) embedded in the push-to-activate physical button (12; 22; 32) for indicating when a particular function among the plurality of push-to-activate communication functions is ready to be activated and for indicating which among the plurality of push-to-activate communication functions will be activated upon user activation of the push-to-activate physical button (12; 22; 32).

2. The system of claim 1, wherein the system grants the communication function activated by the user activation of the push-to-activate physical button (12; 22; 32) greater priority over other communication functions.

3. The system of claim 1, wherein the system further comprises an immediacy manager and a data manager coupled to the push-to-activate physical button (12; 22; 32) wherein the immediacy manager monitors a state of at least two applications running on the system.

4. The system of claim 3, wherein activation of the push-to-activate physical button (12; 22; 32) causes the data manager to add at least one among headers, flags, and settings having a highest priority.

5. The system of claim 3, wherein the immediacy manager communicates with a push-to-activate manager to establish a connection using appropriate information from at least one among a plurality of applications running on the system so that information from the plurality of applications subsequently goes through the immediacy manager.

6. The system of claim 5, wherein the push-to-activate manager establishes a lowest possible set up time connection to different network entities using information from at least one among the plurality of applications running on the system upon receiving a request from the immediacy manager.

7. The system of claim 1, wherein the dynamically configurable indicator (24; 34) comprises a display capable of displaying text or other information.

8. The system of claim 1, wherein the dynamically configurable indicator (24; 34) comprises a color indicator operating cooperatively with a main display coupled to the communication transceiver.

9. The system of claim 1, further comprising an immediacy manager which monitors the state of the particular function and assigns a highest priority available to the particular function when the particular function is activated by the push-to-activate physical button (12; 22; 32).

10. The system of claim 1, wherein the plurality of push- to-activate communication functions are among a push-to-talk function, a push-to-listen function, a push-to-view function, a push-to-send function, and a push-to-link to a network site function.

11. A method of operating a multi-function communication device, comprising the steps of:
selectively activating a multifunction push-to-activate function for a plurality of push-to-activate communication functions using a push-to-activate physical button (12; 22; 32);
the method **characterised by**:
indicating via a dynamically configurable indicator (24; 34) embedded in the push-to-activate physical button (12; 22; 32) when a particular function among the plurality of push-to-activate functions is ready to be activated; and
indicating via the dynamically configurable indicator (24; 34) which among the plurality of push-to-activate communication functions will be activated upon user activation of the push-to-activate physical button (12; 22; 32).

12. The method of claim 11, wherein the method further comprises the step of granting a greater priority to a communication function activated by the push-to-activate physical button (12; 22; 32) over other functions operating at the multi-function communication device.

13. The method of claim 11, wherein the method further comprises the step of monitoring a state of at least two applications running on the communication device using an immediacy manager coupled to the push-to-activate physical button (12; 22; 32).

14. The method of claim 11, wherein the method further comprises the step of adding at least one among headers, flags, and settings having a highest priority using a data manager to data packets associated with at least one function activated using the push-to-activate physical button (12; 22; 32).

15. The method of claim 11, wherein the plurality of push-to-activate communication functions are among a push-to-talk function, a push-to-listen function, a push-to-view function, a push-to-send function, and a push-to-link to a network site function.

## Patentansprüche

1. Multifunktionales Push-to-activate-System, umfassend:
eine physische Push-to-activate-Taste (12; 22; 32) an einem Kommunikations-Transceiver (10; 20; 30) für eine wahlweise Aktivierung einer Vielzahl von Push-to-activate-Kommunikationsfunktionen;
**gekennzeichnet durch**:
eine in die physische Push-to-activate-Taste (12; 22; 32) eingebettete dynamisch konfigurierbare Anzeigeeinrichtung (24; 34) zum Anzeigen, wenn eine bestimmte Funktion der Vielzahl von Push-to-activate-Kommunikationsfunktionen bereitsteht für die Aktivierung, und zum Anzeigen, welche der Vielzahl von Push-to-activate-Kommunikationsfunktionen nach der Aktivierung der physischen Push-to-activate-Taste (12; 22; 32) **durch** den Benutzer aktiviert werden wird.

2. System nach Anspruch 1, wobei das System der Kommunikationsfunktion, die durch die benutzerseitige Aktivierung der physischen Push-to-activate-Taste (12; 22; 32) aktiviert wurde, gegenüber anderen Kommunikationsfunktionen höhere Priorität einräumt.

3. System nach Anspruch 1, wobei das System ferner einen Dringlichkeitsmanager und einen Datenmanager enthält, die mit der physischen Push-to-activate-Taste (12; 22; 32) verbunden sind, wobei der Dringlichkeitsmanager einen Zustand von mindestens zwei Anwendungen überwacht, die auf dem System laufen.

4. System nach Anspruch 3, wobei die physische Push-to-activate-Taste (12; 22; 32) den Datenmanager veranlasst, von Headern, Flags und Einstellungen mit höchster Priorität zumindest den Header oder das Flag oder die Einstellungen hinzuzufügen.

5. System nach Anspruch 3, wobei der Dringlichkeitsmanager mit einem Push-to-activate-Manager kommuniziert, um eine Verbindung herzustellen, und hierfür entsprechende Informationen von mindestens einer Anwendung einer Vielzahl von auf dem System laufenden Anwendungen nutzt, so dass Informationen von der Vielzahl von Anwendungen anschließend durch den Dringlichkeitsmanager gehen.

6. System nach Anspruch 5, wobei der Push-to-activate-Manager nach dem Empfang einer Aufforderung von dem Dringlichkeitsmanager zu unterschiedlichen Netzwerkeinheiten eine Verbindung mit der kürzest möglichen Einrichtzeit herstellt und hierfür Informationen von mindestens einer Anwendung einer Vielzahl von auf dem System laufenden Anwendungen nutzt.

7. System nach Anspruch 1, wobei die dynamisch konfigurierbare Anzeigeeinrichtung (24; 34) ein Display umfasst, das für die Anzeige von Text oder anderen Informationen geeignet ist.

8. System nach Anspruch 1, wobei die dynamisch konfigurierbare Anzeigeeinrichtung (24; 34) eine Farbanzeigeeinrichtung umfasst, die unter Zusammenwirken mit einem Hauptdisplay, das mit dem Kommunikations-Transceiver verbunden ist, arbeitet.

9. System nach Anspruch 1, ferner umfassend einen Dringlichkeitsmanager, der den Zustand der bestimmten Funktion überwacht und der bestimmten Funktion eine höchste verfügbare Priorität zuordnet, wenn die bestimmte Funktion durch die physische Push-to-activate-Taste (12; 22; 32) aktiviert wird.

10. System nach Anspruch 1, wobei die Vielzahl von Push-to-activate-Kommunikationsfunktionen unter anderem sind: eine Push-to-talk-Funktion, eine Push-to-listen-Funktion, eine Push-to-view-Funktion, eine Push-to-send-Funktion und eine Push-to-link-to-Netzstandort-Funktion.

11. Verfahren zum Betreiben einer Multifunktions-Kommunikationsvorrichtung, umfassend die Schritte:
wahlweises Aktivieren einer multifunktionalen Push-to-activate-Funktion für eine Vielzahl von Push-to-activate-Kommunikationsfunktionen durch das Benutzen einer physischen Push-to-activate-Taste (12; 22; 32);
wobei das Verfahren **gekennzeichnet ist durch**:
Anzeigen über eine dynamisch konfigurierbare Anzeigeeinrichtung (24; 34), die in die physische Push-to-activate-Taste (12; 22; 32) eingebettet ist, wenn eine bestimmte Funktion der Vielzahl von Push-to-activate-Funktionen bereit für die Aktivierung ist; und
Anzeigen über die dynamisch konfigurierbare Anzeigeeinrichtung (24; 34), welche der Vielzahl von Push-to-activate-Kommunikationsfunktionen nach der benutzerseitigen Aktivierung der physischen Push-to-activate-Taste (12; 22; 32) aktiviert werden wird.

12. Verfahren nach Anspruch 11, wobei dieses ferner den Schritt umfasst, in welchem der Kommunikationsfunktion, die durch die benutzerseitige Aktivierung der physischen Push-to-activate-Taste (12; 22; 32) aktiviert wurde, gegenüber anderen Kommunikationsfunktionen höhere Priorität eingeräumt wird.

13. Verfahren nach Anspruch 11, wobei dieses ferner den Schritt Überwachen eines Zustands von mindestens zwei auf der Kommunikationsvorrichtung laufenden Anwendungen unter Verwendung eines mit der physischen Push-to-activate-Taste (12; 22; 32) verbundenen Dringlich keitsmanagers umfasst.

14. Verfahren nach Anspruch 11, wobei das Verfahren ferner den Schritt umfasst Hinzufügen von wenigstens einem von Headern, Flags und Einstellungen mit höchster Priorität unter Verwendung eines Datenmanagers zu Datenpaketen, die mit mindestens einer Funktion verknüpft sind, die durch das Benutzen der physischen Push-to-activate-Taste (12; 22; 32) aktiviert wird.

15. Verfahren nach Anspruch 11, wobei die Vielzahl von Push-to-activate-Kommunikationsfunktionen unter anderem sind: eine Push-to-talk-Funktion, eine Push-to-listen-Funktion, eine Push-to-view-Funktion, eine Push-to-send-Funktion und eine Push-to-link-to-Netzstandort-Funktion.

## Revendications

1. Un système pousser-pour-activer multifonctions, comprenant :
un bouton physique pousser-pour-activer (12 ; 22 ; 32) sur un émetteur-récepteur (10 ; 20 ; 30) pour activer une pluralité de fonctions de communication pousser-pour-activer au choix ; **caractérisé par** :
un indicateur dynamiquement configurable (24 ; 34) embarqué dans le bouton physique pousser-pour-activer (12 ; 22 ; 32) pour indiquer quand une fonction particulière parmi la pluralité de fonctions de communication pousser-pour-activer est prête à être activée et pour indiquer laquelle parmi la pluralité des fonctions de communication pousser-pour-activer sera activée lors de l'activation du bouton physique pousser-pour-activer (12 ; 22 ; 32) par l'utilisateur.

2. Le système selon la revendication 1 dans lequel le système confère à la fonction de communication activée par l'activation par l'utilisateur du bouton physique pousser-pour-activer (12 ; 22 ; 32) une priorité plus grande qu'aux autres fonctions de communication.

3. Le système selon la revendication 1, dans lequel le système comprend en outre un gestionnaire d'immédiateté et un gestionnaire de données accouplé au bouton physique pousser-pour-activer (12 ; 22 ; 32) dans lequel le gestionnaire d'immédiateté surveille un état d'au moins deux applications en cours dans le système.

4. Le système selon la revendication 3, dans lequel l'activation du bouton physique pousser-pour-activer (12 ; 22 ; 32) engage le gestionnaire de données à ajouter au moins un d'entre en-tête, drapeaux et paramètres ayant une priorité maximale.

5. Le système selon la revendication 3, dans lequel le gestionnaire d'immédiateté communique avec un gestionnaire pousser-pour-activer pour établir une connexion en utilisant de l'information approprié depuis au moins une parmi une pluralité d'applications en cours au système tel que de l'information depuis la pluralité d'applications passe par le gestionnaire d'immédiateté subséquemment.

6. Le système selon la revendication 5, dans lequel le gestionnaire pousser-pour-activer établit une connexion ayant un temps de préparation le plus court possible à des entités de réseau différents en utilisant de l'information depuis au moins une parmi la pluralité d'applications en cours dans le système lors de la réception d'une requête depuis le gestionnaire d'immédiateté.

7. Le système selon la revendication 1, dans lequel l'indicateur dynamiquement configurable (24 ; 34) comprend un affichage capable d'afficher du texte ou d'autres informations.

8. Le système selon la revendication 1, dans lequel l'indicateur dynamiquement configurable (24 ; 34) comprend un indicateur couleurs opérant en coopération avec un affichage principal accouplé à l'émetteur-récepteur.

9. Le système selon la revendication 1, comprenant en outre un gestionnaire d'immédiateté qui surveille l'état de la fonction particulière et assigne une priorité la plus élevée disponible à la fonction particulière quand la fonction particulière est activée par le bouton physique pousser-pour-activer (12; 22 ; 32).

10. Le système selon la revendication 1, dans lequel la pluralité de fonctions de communication pousser-pour-activer sont parmi une fonction pousser-pour-parler, une fonction pousser-pour-écouter, une fonction pousser-pour-voir, une fonction pousser-pour-envoyer, et une fonction pousser-pour-relier à un site réseau.

11. Un procédé pour opérer un dispositif de communication multifonctions, comprenant les étapes de :
activer sélectivement une fonction multifonctions pousser-pour-activer pour une pluralité de fonctions de communication pousser-pour-activer en utilisant un bouton physique pousser-pour-activer (12 ; 22 ; 32) ;
le procédé **caractérisé par** :
indiquer via un indicateur dynamiquement configurable (24 ; 34) embarqué dans le bouton physique pousser-pour-activer (12 ; 22 ; 32) quand une fonction particulière parmi la pluralité de fonctions pousser-pour-activer est prête à être activée ; et
indiquer via l'indicateur dynamiquement configurable (24 ; 34) laquelle parmi la pluralité de fonctions de communication pousser-pour-activer sera activée lors de l'activation du bouton physique pousser-pour-activer (12 ; 22 ; 32) par l'utilisateur.

12. Le procédé selon la revendication 11, dans lequel le procédé comprend en outre l'étape de conférer une priorité plus élevée à une fonction de communication activée par le bouton physique pousser-pour-activer (12 ; 22 ; 32) qu'à d'autres fonctions opérant au dispositif de communication multifonctions.

13. Le procédé selon la revendication 11, dans lequel le procédé comprend en outre l'étape de surveiller un état d'au moins deux applications en cours au dispositif de communication en utilisant un gestionnaire d'immédiateté accouplé au bouton physique pousser-pour-activer (12 ; 22 ; 32).

14. Le procédé selon la revendication 11, dans lequel le procédé comprend en outre l'étape d'ajouter au moins un parmi d'en-têtes, des drapeaux et réglages ayant une priorité la plus élevée en utilisant un gestionnaire de données à des paquets de données associés à au moins une fonction activée en utilisant le bouton physique pousser-pour-activer (12 ; 22 ; 32).

15. Le procédé selon la revendication 11, dans lequel la pluralité de fonctions de communication pousser-pour-activer sont parmi une fonction pousser-pourparler, une fonction pousser-pour-écouter, une fonction pousser-pour-voir, une fonction pousser-pour-envoyer, et une fonction pousser-pour-relier à un site réseau.
